# EUROPÄISCHE PATENTSCHRIFT

(11) **EP 2 215 940 B1**
(45) Veröffentlichungstag und Bekanntmachung des Hinweises auf die Patenterteilung: **18.07.2012**
(21) Anmeldenummer: 10151119.4
(22) Anmeldetag: 19.01.2010
(51) Int. Cl.: A47J 31/44

(54) **Eiswürfeldosiereinrichtung**
Ice cube metering device
Dispositif de dosage de glaçons

(30) Priorität: 06.02.2009 DE 202009001489 U
(43) Veröffentlichungstag der Anmeldung: 11.08.2010
(73) Patentinhaber: MELITTA HAUSHALTSPRODUKTE GmbH & Co. Kommanditgesellschaft, 32427 Minden (DE)
(72) Erfinder: Aus der Fünten, Sandra, 33739, Bielefeld (DE); Aengenheyster, Gerald, 32427, Minden (DE); Krutemeyer, Nils, 32278, Kirchlengern (DE)
(74) Vertreter: Dantz, Jan Henning

(56) Entgegenhaltungen:
- WO-A2-2007/072374
- DE-A1- 19 517 638
- US-A- 2 431 916
- US-A- 2 968 935

## Beschreibung

Die vorliegende Erfindung betrifft ein Gerät zur Ausgabe von Getränken, insbesondere von kaffeehaltigen Getränken, mit einer Brüheinheit, durch die heißes Wasser zur Extraktion durchleitbar ist, wobei ein zubereitetes Getränk an einer Getränkeausgabe in ein Behältnis befüllbar ist und eine Kühleinrichtung, mittels der Eis zur Kühlung eines Getränks zuführbar ist.

Aus der DE 34 05 396 ist ein Extraktbereitungsgetränk bekannt, mit dem wahlweise oder heiße Getränke herstellbar sind. Dabei wird ein Brühgetränk zubereitet, das optional durch ein Kühlgefäß mit Eis durchläuft. Die Befüllung des Kühlgefäßes mit Eis kann das gebrühte Getränk herunterkühlen. Allerdings ist die Mengendosierung des Eises abhängig vom Benutzer und das Getränk wird je nach Durchlaufzeit, Größe und Menge der Eiswürfel mehr oder weniger herunter gekühlt. Das Geschmacksergebnis des zubereiteten Getränks ist somit starken Schwankungen unterworfen.

Aus der US 4 176 527 ist ein Gerät zum Zerkleinern von Eiswürfeln bekannt, mittels dem wahlweise Eiswürfel oder zerkleinertes Eis ausgegeben wird. Dadurch kann bei der Herstellung von Eiswürfeln eine gewisse Dosierung erfolgen, wobei die Eiswürfel direkt in ein Behältnis abgegeben werden.

Die WO 2007/072374 offenbart eine Maschine zur Ausgabe von Getränken, bei der auch ein Eiserzeuger eingesetzt werden kann. Über den Eiserzeuger können Eiswürfel einem Getränk zugegeben werden.

Die DE 195 17 638 offenbart ein Verfahren zur Herstellung eines Kaltgetränkes, bei dem zunächst ein Pulver in heißem Wasser aufgelöst und dann gekühlt wird. Hierfür wird dem Getränk Eis oder Eismus über eine Dosiereinrichtung zugegeben.

Es ist daher Aufgabe der vorliegenden Erfindung, ein Gerät zur Ausgabe von Getränken zu schaffen, mittels dem auch gekühlte Getränke mit hoher Qualität zubereitet werden können.

Diese Aufgabe wird mit einem Gerät mit den Merkmalen des Anspruchs 1 gelöst.

Erfindungsgemäß umfasst das Gerät zur Ausgabe von Getränken neben der Brüheinheit und einer Kühleinrichtung eine Dosiereinrichtung für Eiswürfel, mittels der eine automatische Dosierung bei der Getränkezubereitung durchführbar ist. Dadurch ist für den Benutzer gewährleistet, daß über eine Steuerung ein vorbestimmtes Getränk ausfüllbar ist, das in der gewünschten Weise über eine vorbestimmte Menge an Eis gekühlt wird. Es wird vermieden, daß durch zu viel Eis oder einer zu langen Kontaktdauer des Brühgetränkes mit dem Eis eine Verwässerung des Getränks erfolgt oder umgekehrt durch eine zu kurze Kontaktzeit die Kühlung nur unzureichend durchgeführt wird. Durch die Erfindung wird ermöglicht, daß Getränke sowohl in heißer als auch in gekühlter Form mit hoher Qualität zubereitet werden.

Gemäß der Erfindung weist die Dosiereinrichtung eine austauschbare Aufnahme mit einer Vielzahl von Eiswürfeln auf. Dadurch kann der Benutzer die Eiswürfel in der Aufnahme in einem Kühlfach herstellen und dann bei der Zubereitung eines gekühlten Getränks die Aufnahme mit den Eiswürfeln in das Gerät einsetzen. Hierfür sind nur wenige Schritte notwendig, so daß auf eine aufwendige Kühlung und Herstellung von Eiswürfeln im Gerät verzichtet werden kann. Dabei ist die Aufnahme schalenförmig ausgebildet und umfasst mehrere getrennte Kammern, in denen jeweils ein Eiswürfel angeordnet ist.

Für eine exakte Dosierung umfasst die Dosiereinrichtung einen Ausstoßer, mittels dem ein oder mehrere Eiswürfel aus der Aufnahme auswerfbar sind.

Vorzugsweise ist die Aufnahme drehbar in dem Gerät angeordnet und zum Auswerfen eines Eiswürfels wird die Aufnahme in eine vorbestimmte Position relativ zu dem ortsfest angeordneten Ausstoßer angebracht. Der Ausstoßer kann dabei über eine Nockenwelle angetrieben sein und einen Hebel umfassen, der gegen einen Bodenabschnitt der Aufnahme bewegbar ist, so daß sich durch die Verlor-mund oder durch eine Ausstoßkraft der Eiswürfel aus der Aufnahme löst und in einen Behälter einer Kühleinrichtung herunterfällt. Für eine einfache Handhabung ist die Aufnahme dabei aus einem flexiblen Material, insbesondere Gummi, Silikon oder einem Kunststoff, gebildet.

In einer weiteren Ausgestaltung der Erfindung sind in jeder Kammer Haltemittel vorgesehen, um einen darin angeordneten Eiswürfel gegen ein Herausfallen zu sichern. Denn die Aufnahme wird mit ihrer offenen Seite meist nach unten angeordnet, so daß bei einem geringfügigen Anschmelzen der Eiswürfel diese unbeabsichtigt herunterfallen könnten. Dies wird vermieden, wenn in der Kammer entsprechende Haltemittel, beispielsweise in Form von Leisten, Vorsprüngen oder anderen Elementen ein Herausfallen verhindert wird.

Gemäß einer weiteren Ausgestaltung der Erfindung umfasst die Dosiereinrichtung für Eiswürfel eine Einrichtung zum Zerkleinern von Eis. Dadurch kann gewährleistet werden, daß die Eiswürfel nicht nur in großen Stücken sondern auch in zerkleinerter Form dosiert werden. Dies verringert die Zeit zum Kühlen eines Getränks erheblich, da beim Zerkleinern die Oberfläche der Eiswürfel erheblich vergrößert wird. Die Verweilzeit des Getränks im Gerät kann dadurch erheblich verkürzt werden. Die Eiswürfel können dabei wahlweise in einen Sammelbehälter zum Kühlen des heißen Brühgetränks oder direkt in einer Getränkeausgabe in ein Behältnis gefördert werden.

Vorzugsweise ist ein Sensor zur Erfassung einer Befüllung einer Kammer oder Aufnahme vorgesehen, so daß die Dosiereinrichtung auch eine Aufnahme verarbeiten kann, in der nur ein Teil der Kammern mit Eiswürfeln befüllt sind. Dadurch kann die Aufnahme auch ohne vollständigen Verbrauch aller Eiswürfel wieder in das Gerät eingesetzt werden.

Die Erfindung wird nachfolgend anhand eines Ausführungsbeispiels mit Bezug auf die beigefügten Zeichnungen näher läutert. Es zeigen:

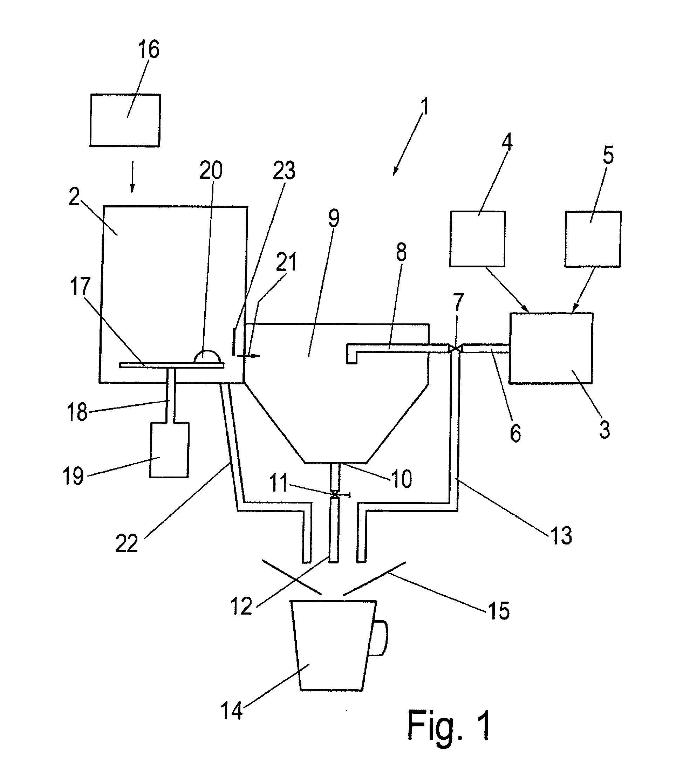

- Fig. 1: eine schematische Ansicht eines erfindungsgemäßen Gerätes zur Ausgabe von Getränken;
- Fig. 2A und 2B: zwei perspektivische Ansichten der Dosiereinrichtung des Geräts;

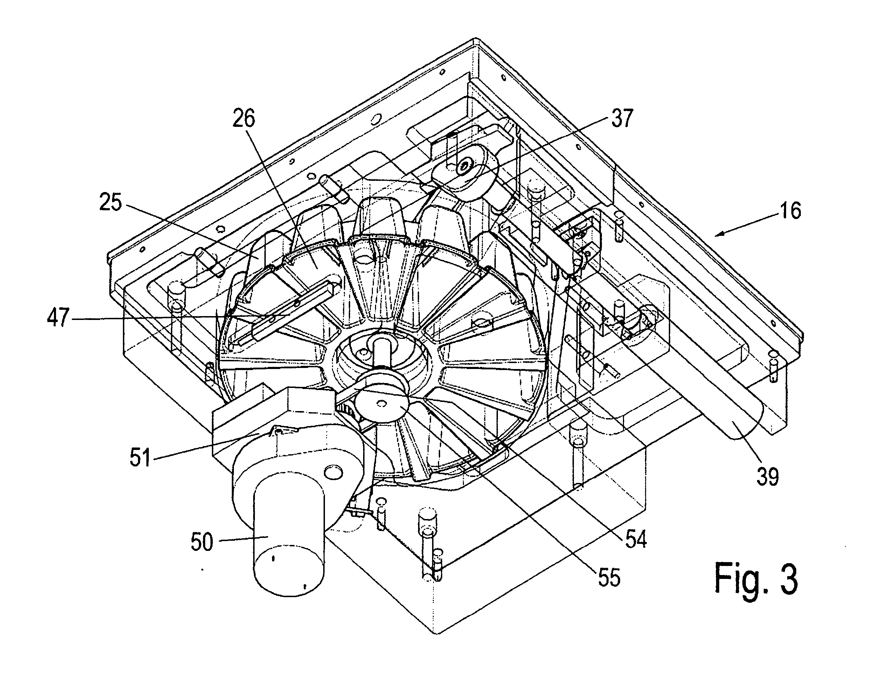

- Fig. 3: eine Unteransicht der Dosiereinrichtung des Geräts
- Fig. 4: eine perspektivische Explosionsdarstellung der Einzelteile der Dosiereinrichtungen; und
- Fig. 5A bis 5C: mehrere Ansichten der Aufnahme der Dosiereinrichtung.

Ein Gerät 1 zur Ausgabe von Getränken, insbesondere von Kaffee, umfasst eine Einrichtung 2 zum Zuführen von Eis, die gemeinsam in dem Gerät 1 mit einer Brüheinheit 3 zum Herstellen eines Heißgetränks untergebracht ist. Die Brüheinheit 3 wird durch einen schematisch dargestellten Zulauf 4 für heißes Wasser und einer Dosiereinrichtung 5 für ein Extraktionsmittel, insbesondere Kaffee, versorgt. Der Kaffee kann dabei über ein Mahlwerk in der gewünschten Menge der Brüheinheit 3 zugeführt werden. Von der Brüheinheit 3 geht eine Ausgabeleitung 6 zu einer Abzweigung 7, die schaltbar ausgebildet ist und wahlweise das gebrühte Getränk durch eine Leitung 13 zu einer Getränkeausgabe 15 leitet oder in einen Zulauf 8 zu einem Sammelbehälter 9. Der Sammelbehälter 9 ist im unteren Bereich trichterförmig ausgebildet und umfasst an einem Auslaß 10 ein schaltbares Ventil 11, das einen Ablauf 12 zu einer Getränkeausgabe 15 öffnet oder schließt.

Die Getränkeausgabe 15 ist schematisch als Sammeleinrichtung dargestellt, die einen Auslaß aufweist, unter der ein Behältnis 14, insbesondere ein Becher abgestellt ist.

Oberhalb der Einrichtung 2 zum Zuführen von Eis ist eine Eisdosiereinrichtung 16 vorgesehen, die automatisch betreibbar ist und ein oder mehrere Eiswürfel in die Einrichtung 2 abgibt. Die Eisdosiereinrichtung 16 kann dabei ein Sammelbehälter oder eine Sammeleinrichtung für Eiswürfel oder ein Aggregat zum Herstellen von Eiswürfeln sein.

Die Einrichtung 2 zum Zuführen von Eis umfasst einen Behälter, in dem eine Scheibe 17 zum Zerkleinern von Eis angeordnet ist. Die Scheibe 17 ist durch eine Welle 18 angetrieben, die über einen Motor 19 drehbar ist, wobei optional auch Getriebe oder Kupplungen vorgesehen sein können. An der Scheibe 17 ist ein hervorstehendes Umwälzelement 20 vorgesehen, mittels dem in dem Behälter angeordnete Eiswürfel gegen eine schematisch dargestellte Schneide 23 bewegt werden, so daß diese in zerkleinerter Form in den Sammelbehälter 9 abgegeben werden können, wie dies mit dem Pfeil 21 angedeutet ist. Die Schneide 23 kann dabei verstellbar ausgebildet sein, um dir Größe der zerkleinerten Eisstücke einstellen zu können.

Falls eine Ausgabe der zerkleinerten Eiswürfel in das Behältnis 14 gewünscht wird, kann ein schaltbarer Auslaß betätigt werden, um die zerkleinerten Eiswürfel direkt von der Einrichtung 2 zum Zuführen von Eis zu der Getränkeausgabe 15 zu fördern, wie dies mit der schematisch dargestellten Leitung 22 angedeutet ist.

Zur Ausgabe eines Heißgetränks wird die Brüheinheit 3 mit heißem Wasser und einem Extraktionsmittel befüllt und gibt dann über die Leitung 6 und die Leitung 13 das Brühgetränk an die Getränkeausgabe 15 ab.

Sofern die Ausgabe eines Kaltgetränks gewünscht wird, beispielsweise Eiskaffee oder Eistee, dann erfolgt eine Kühlung des Brühgetränks in dem Gerät 1, wobei hierfür gleichzeitig die Brüheinheit 3 betätigt werden kann und parallel dazu über die Eisdosiereinrichtung 16 ein oder mehrere Eiswürfel in die Einrichtung 2 zum Zuführen von Eis gegeben werden. In der Einrichtung 2 werden dann die ein oder mehrere Eiswürfel zerkleinert und in den Sammelbehälter 9 abgegeben. Im Sammelbehälter 9 wird dann das gebrühte Getränk aus der Leitung 8 zusammen mit den zerkleinerten Eiswürfeln aus der Einrichtung 2 zum Zuführen von Eis gesammelt, wobei das Ventil 11 für eine vorbestimmte Zeit, beispielsweise zwischen 10 Sekunden und 60 Sekunden verschlossen sein kann. In dieser Zeit lösen sich die zerkleinerten Eiswürfel in dem Sammelbehälter 9 auf und können das Brühgetränk auf die gewünschte Temperatur abkühlen. Nach dieser Zeitdauer wird dann das Ventil 11 über ein Stellelement geöffnet und das gekühlte Getränk kann durch die Ausgabeleitung 12 der Getränkeausgabe 15 und an dem Behältnis 14 zugeführt werden. Die Ansteuerung der Brüheinheit 3, der Einrichtung 2 sowie des Ventils 11 kann über eine zentrale Steuerung des Gerätes 1 erfolgen.

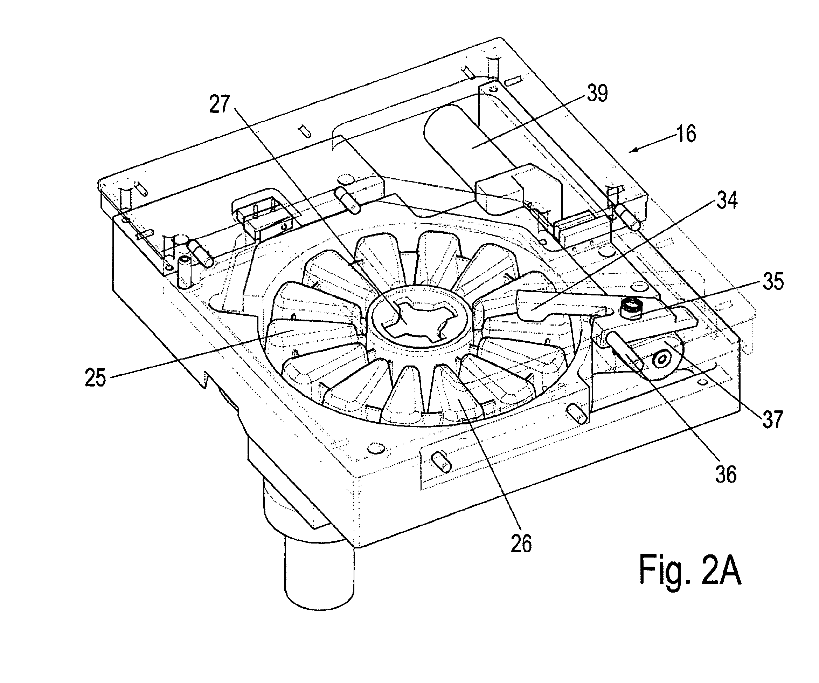

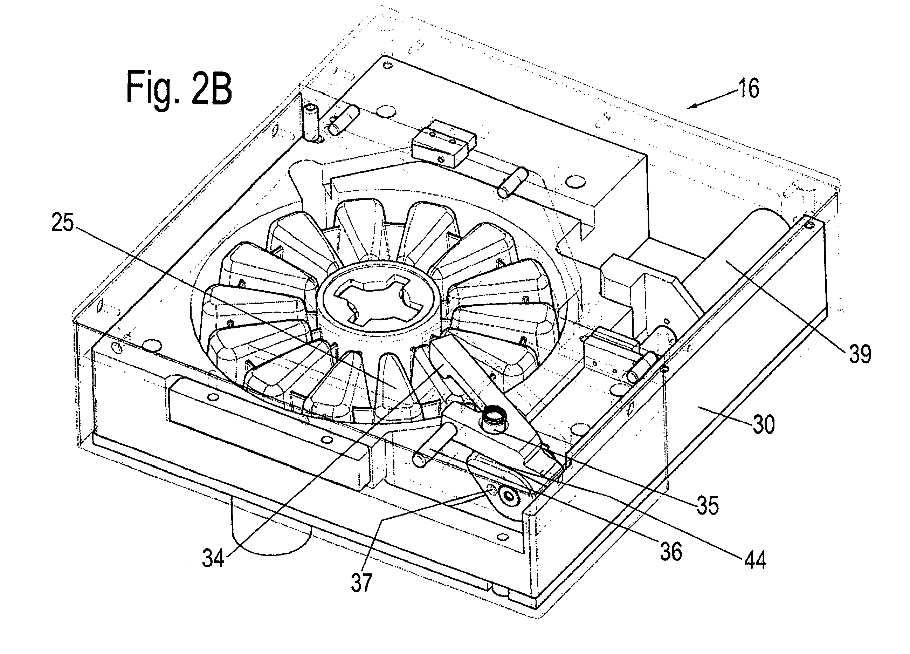

Die Dosiereinrichtung 16 für Eiswürfel ist in den Fig. 2A und 2B dargestellt. An der Oberseite des Gerätes 1 ist eine drehbare Aufnahme 25 angeordnet, die schalenförmig ausgebildet ist und einzelne Kammern 26 mit jeweils einem Eiswürfel aufweist. In der Mitte der Aufnahme 25 ist eine Steckkupplung 27 ausgebildet, die in Eingriff mit einem Antrieb bringbar ist.

An jeweils einer Kammer 26 der Aufnahme 25 ist ein Ausstoßer 34 in Form eines Hebels vorgesehen, der um eine Achse 36 drehbar gelagert ist. Der Ausstoßer 34 ist auf der zur Achse 36 gegenüberliegenden Seite durch einen Nocken 37 betätigbar, der den Ausstoßer 34 gegen die Kraft einer Feder 35 gegen einen Bodenabschnitt an einer Kammer 26 bewegt und dabei einen Eiswürfel aus der Kammer 26 herausdrückt.

Um die Aufnahmen 25 weiter zu drehen, damit eine befüllte Kammer 26 zu dem Ausstoßer 34 gelangt, ist ein Motor 50 vorgesehen, der über eine Motorlagerung 51 gehalten ist und über ein Antriebsrad 55 und einen Riemen 54 die Aufnahme 25 dreht.

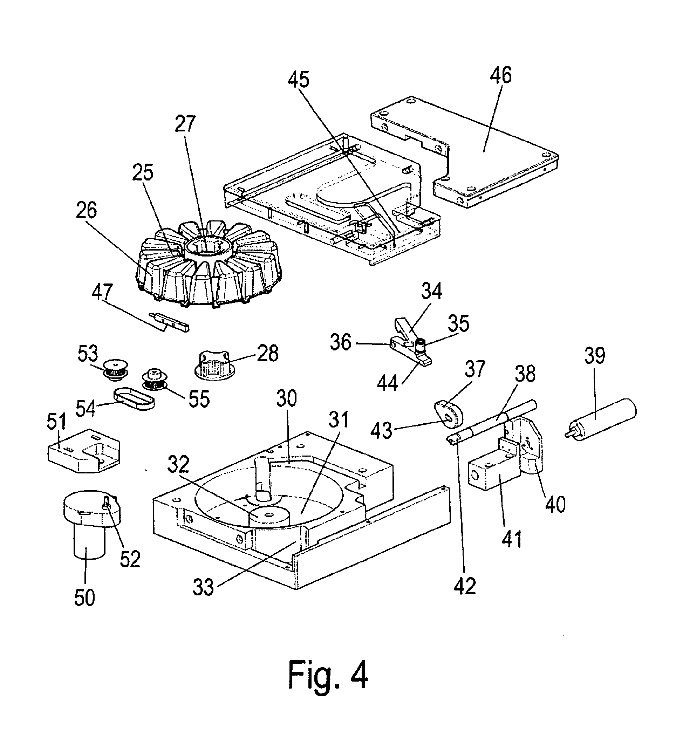

In Fig. 4 sind die Einzelteile der Dosiervorrichtung dargestellt. Die nach unten offene Aufnahme 25 weist an der Unterseite eine Vielzahl von Gleitschuhen 29 zwischen den einzelnen Kammern 26 auf, die an einer Bodenfläche 31 in einer Aufnahme an einem Gehäuse 30 abgestützt sind. In der Aufnahme ist ferner ein mittiger Zapfen 32 zur Lagerung der Aufnahme 25 angeordnet.

Der Ausstoßer 34 und die Antriebselemente befinden sich in einer Aussparung 33 des Gehäuses 30, wobei der Ausstoßer 34 über eine Achse 36 drehbar an dem Gehäuse 30 gelagert ist. Um den Ausstoßer 34 wieder in die Ausgangsposition zurückzubewegen ist eine Druckfeder 35 vorgesehen, ein Nocken 37 ist dabei auf einer Welle 38 drehfest gelagert, wobei die Welle 38 einen stegförmigen Endabschnitt 42 aufweist, der in eine entsprechende schlitzförmige Aufnahme 43 eingesteckt ist. Die Welle 38 ist über einen Motor 39 angetrieben, der an einer Motorlagerung 40 an dem Gehäuse 30 drehfest angeordnet ist. Ferner ist zur Lagerung der Welle 38 ein Lagerblock 41 vorgesehen.

An dem Gehäuse 30 ist ferner die Motorlagerung 51 des Motors 50 zur Drehung der Aufnahme 25 angeordnet. Der Motor 50 treibt über eine Abtriebswelle 52 ein erstes Antriebsrad 53 an, das über einen Riemen 54 ein zweites Antriebsrad 55 dreht. Das Antriebsrad 55 ist über eine Kupplung 58 mit der Aufnahme 25 gekoppelt, so daß die Aufnahme 25 schrittweise in dem Gehäuse 30 gedreht werden kann.

Zur Erfassung einer Befüllung einer Kammer 26 ist ein Sensor 47 vorgesehen, mittels dem erfassbar ist, ob ein Eiswürfel in einer Kammer 26 vorhanden ist oder nicht.

An dem Gehäuse 30 ist ferner eine feststehende Abdeckung 46 sowie eine bewegbare Abdeckung 45 vorgesehen.

Wenn der Benutzer kein heißes Brühgetränk sondern ein gekühltes Getränk aus dem Gerät 1 erhalten möchte, wird zunächst nach der Programmauswahl über eine Anzeige das Einfügen einer mit Eiswürfeln befüllten Aufnahme 25 gefördert. Hierfür kann der Deckel 45 verschwenkt werden, damit der Benutzer eine Aufnahme 25 in das Gehäuse 30 einfügen kann, wobei die Aufnahme 25 ganz oder teilweise mit Eiswürfeln befüllt ist.

Über eine Steuerung wird nun ermittelt, ob für die Zubereitung des ausgewählten Getränks ein oder mehrere Eiswürfel 26 notwendig sind. Die entsprechende Menge an Eiswürfeln wird über den Ausstoßer 34 in einen Behälter der Kühleinrichtung 2 ausgegeben, die dann den Eiswürfel zerkleinert und wahlweise in den Sammelbehälter 9 oder direkt in die Getränkeausgabe 15 abgibt.

Nachdem alle gekühlten Getränke in dem Gerät 1 hergestellt sind, kann die Aufnahme 25 wieder aus dem Gerät 1 entnommen werden, um sie in das Kühlfach eines Kühlschrankes einzulegen, ggf. unter Auffüllung mit Wasser zur Herstellung weiterer Eiswürfel.

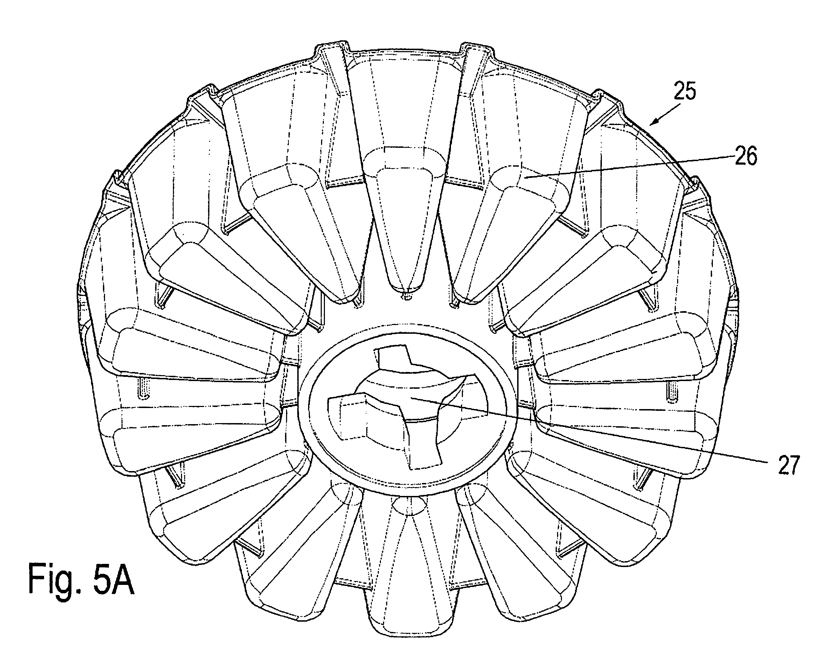

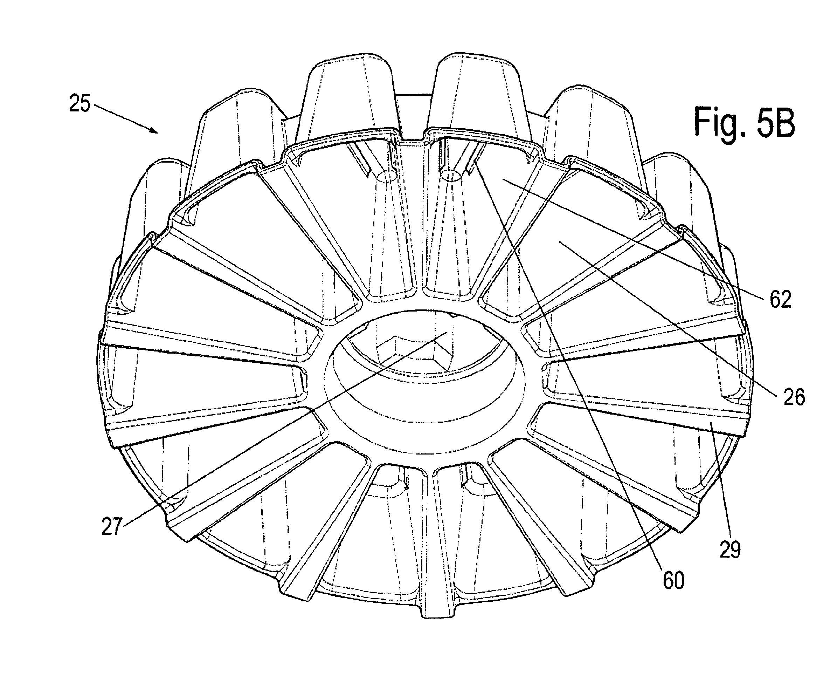

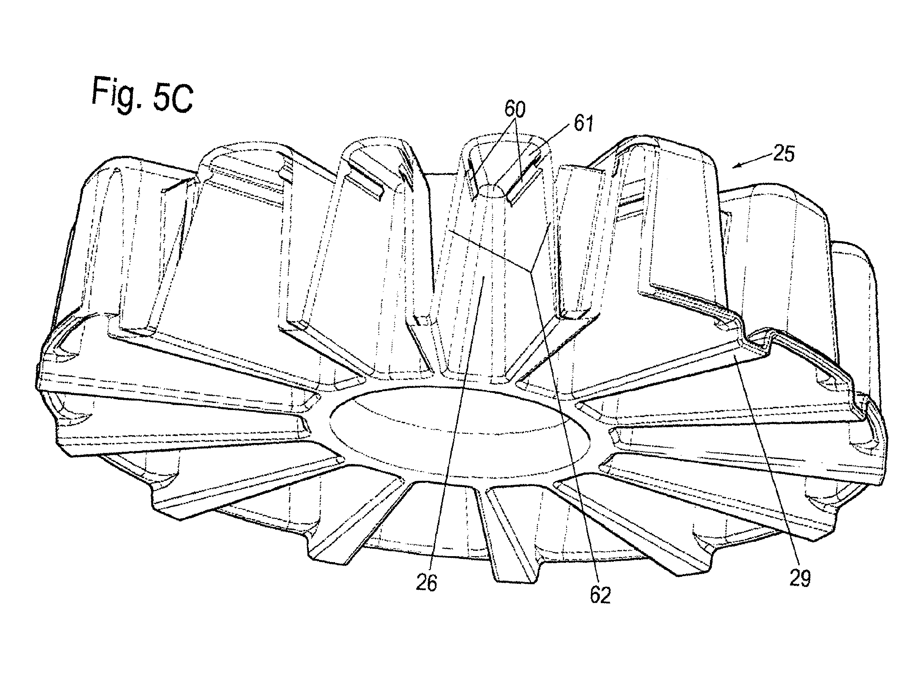

In den Fig. 5A bis 5C ist die Aufnahme 25 im Detail dargestellt. Die Aufnahme 25 besteht aus einem flexiblen Material, insbesondere Gummi oder Silikon und umfasst mehrere nach unten geöffnete Kammern 26, die zur Aufnahme der Eiswürfel dienen. Jede Kammer 26 umfaßt Haltemittel in Form von Leisten 60, die einen verjüngten Halsabschnitt ausbilden, an den sich eine Erweiterung 61 anschließt. Dadurch wird ein Eiswürfel auch dann in der Kammer 26 gehalten, wenn an den Wänden des Eiswürfels ein Schmelzprozeß begonnen hat. Denn durch die Leisten 60 wird ein verjüngter Querschnitt gebildet, der ein Herunterfallen des Eiswürfels erst dann ermöglicht, wenn in den verbreiterten Kopfabschnitt 61 der Schmelzprozeß so eine Veränderung der Geometrie des Eiswürfels geführt hat, daß dieser durch den verengten Querschnitt durch die Leisten 60 paßt. Für ein leichtes Ausstoßen der Eiswürfel sind Seitenwände 62 nach unten aufspreizend ausgebildet, so daß hier keine ungewollten Halte- oder Reibkräfte entstehen.

Die Aufnahme 25 kann auch andere Formen von Eiswürfeln herstellen, insbesondere können statt der segmentförmigen Kammern auch runde, quadratische, rechteckige oder andere Geometrien von Eiswürfeln hergestellt werden. Es ist auch möglich, die Kammern 26 an der Aufnahme 25 mit sehr geringem Volumen auszubilden, so daß auf die Einrichtung zum Zerkleinern der Eiswürfel verzichtet werden kann.

## Patentansprüche

1. Gerät (1) zur Ausgabe von Getränken, insbesondere von kaffeehaltigen Getränken, mit einer Brüheinheit (3), durch die heißes Wasser zur Extraktion durchleitbar ist, wobei ein zubereitetes Getränk an einer Getränkeausgabe (15) in ein Behältnis (14) füllbar ist, und eine Kühleinrichtung (2), mittels der Eis zur Kühlung eines Getränks zuführbar ist, wobei eine Dosiereinrichtung (16) für Eiswürfel vorgesehen ist, mittels der eine automatische Dosierung bei der Getränkezubereitung durchführbar ist, **dadurch gekennzeichnet, daß** die Dosiereinrichtung (16) eine austauschbare Aufnahme (25) mit einer Vielzahl von Eiswürfeln aufweist, daß die Aufnahme (25) schalenförmig ausgebildet ist und mehrere getrennte Kammern (26) mit jeweils einem Eiswürfel aufweist, und daβ die Dosiereinrichtung (16) einen Ausstoßer (34) umfasst, mittels dem ein oder mehrere Eiswürfel aus der Aufnahme (25) auswerfbar sind.

2. Gerät nach Anspruch 1, **dadurch gekennzeichnet, daß** die Aufnahmen (25) drehbar in dem Gerät (1) angeordnet ist und zum Auswerfen eines Eiswürfels in einer vorbestimmten Position relativ zu dem Ausstoßer (34) bringbar ist.

3. Gerät nach Anspruch 1 oder 2, **dadurch gekennzeichnet, daß** der Ausstoßer einen über eine Nockenwelle (37, 38) angetriebenen Hebel (34) aufweist, der gegen einen Bodenabschnitt der Aufnahmen (25) bewegbar ist.

4. Gerät nach einem der Ansprüche 1 bis 3, **dadurch gekennzeichnet, daß** die Aufnahme (25) aus einem flexiblen Material gebildet ist.

5. Gerät nach einem der Ansprüche 1 bis 4, **dadurch gekennzeichnet, daß** in jeder Kammer (26) ein Haltemittel (60) vorgesehen ist, um einen darin angeordneten Eiswürfel gegen ein Herausfallen zu sichern.

6. Gerät nach einem der Ansprüche 1 bis 5, **dadurch gekennzeichnet, daß** die Dosiereinrichtung (16) für Eiswürfel eine Einrichtung (17, 23) zum Zerkleinern von Eis umfasst.

7. Gerät nach einem der Ansprüche 1 bis 6, **dadurch gekennzeichnet, daß** die Eiswürfel wahlweise in einen Sammelbehälter (9) zum Kühlen des heißen Brühgetränks oder direkt in eine Getränkeausgabe (15) förderbar sind.

8. Gerät nach einem der Ansprüche 1 bis 7, **dadurch gekennzeichnet, daß** ein Sensor (47) zur Erfassung einer Befüllung einer Kammer (26) der Aufnahme (25) vorgesehen ist.

## Claims

1. Apparatus (1) for dispensing beverages, particularly beverages containing coffee, with a brewing unit (3) through which hot water for extraction can be conducted, wherein a prepared beverage is fillable at a beverage outlet (15) into a container (14), and a cooling device (2), by means of which ice for cooling a beverage can be fed, wherein a metering device (16) for ice cubes is provided, by means of which automatic metering at the time of beverage preparation can be performed, **characterised in that** the metering device (16) comprises an exchangeable receptacle (25) with a plurality of ice cubes, that the receptacle (25) is formed to be bowl-shaped and has several separate chambers (26) each with a respective ice cube, and that the metering device (16) comprises an ejector (34) by means of which one or more ice cubes can be expelled from the receptacle (25).

2. Apparatus according to claim 1, **characterised in that** the receptacle (25) is rotatably mounted in the apparatus (1) and for expulsion of an ice cube can be brought into a predetermined position relative to the ejector (34).

3. Apparatus according to claim 1 or 2, **characterised in that** the ejector comprises a lever (34) which is driven by way of a camshaft (37, 38) and which is movable against a base section of the receptacle (25).

4. Apparatus according to any one of claims 1 to 3, **characterised in that** the receptacle (25) is formed from a flexible material.

5. Apparatus according to any one of claims 1 to 4, **characterised in that** provided in each chamber (26) is a holding means (60) in order to secure an ice cube present therein from dropping out.

6. Apparatus according to any one of claims 1 to 5, **characterised in that** the metering device (16) for ice cubes comprises a device (17, 23) for breaking up ice.

7. Apparatus according to any one of claims 1 to 6, **characterised in that** the ice cubes can be selectably conveyed to a collecting container (9) for cooling the hot brewed beverage or directly to a beverage outlet (15).

8. Apparatus according to any one of claims 1 to 7, **characterised in that** a sensor (47) for detecting a filling of a chamber (26) of the receptacle (25) is provided.

## Revendications

1. Appareil (1) pour distribuer des boissons, en particulier des boissons renfermant du café comportant une unité d'ébouillantage (3) dans laquelle de l'eau chaude peut être transférée pour son extraction, une boisson préparée pouvant être versée dans un récipient (14), au niveau d'une sorte de distribution de boissons (15) ainsi qu'un dispositif de refroidissement (2) permettant de fournir de la glace pour refroidir une boisson, un dispositif de dosage (16) de glaçons permettant d'effectuer un dosage automatique lors de la préparation de la boisson,
**caractérisé en ce que**
le dispositif de dosage (16) comporte un dispositif de réception interchangeable (25) renfermant un ensemble de glaçons, le dispositif de réception (25) est réalisé en forme de coquille et comporte plusieurs chambres séparées (26) renfermant chacune un glaçon, et le dispositif de dosage (16) comporte un poussoir (34) au moyen duquel un ou plusieurs glaçons peuvent être éjectés du dispositif de réception (25).

2. Appareil conforme à la revendication 1,
**caractérisé en ce que**
le dispositif de réception (25) est monté mobile en rotation dans l'appareil (1) et peut être positionné dans une position prédéterminée par rapport au poussoir (34) pour éjecter un glaçon.

3. Appareil conforme à la revendication 1 ou 2,
**caractérisé en ce que**
le poussoir comporte un levier (34) actionné par l'intermédiaire d'un arbre à cames (37, 38) et mobile vers une partie de fond du dispositif de réception (25).

4. Appareil conforme à l'une des revendications 1 à 3,
**caractérisé en ce que**
le dispositif de réception (25) est réalisé en un matériau flexible.

5. Appareil conforme à l'une des revendications 1 à 4,
**caractérisé en ce que**
chaque chambre (26) est équipée d'un moyen de retenue (60) pour garantir qu'un glaçon positionné dans celle-ci, ne puisse pas tomber.

6. Appareil conforme à l'une des revendications 1 à 5,
**caractérisé en ce que**
le dispositif de dosage (16) des glaçons, comporte un dispositif (17, 23) pour broyer la glace.

7. Appareil conforme à l'une des revendications 1 à 6,
**caractérisé en ce que**
les glaçons peuvent être sélectivement transférés dans un réservoir collecteur (9) pour refroidir la boisson ébouillantée chaude ou directement dans une sortie (15).

8. Appareil conforme à l'une des revendications 1 à 7,
**caractérisé en ce qu'**
il est prévu un capteur (47) pour détecter le remplissage d'une chambre (26) du dispositif de réception (25).
